(19) Europäisches Patentamt

European Patent Office

Office européen des brevets

(11) Veröffentlichungsnummer: **0 211 361 B1**

(12) **EUROPÄISCHE PATENTSCHRIFT**

(45) Veröffentlichungstag der Patentschrift: **07.10.92**

(21) Anmeldenummer: **86110321.6**

(22) Anmeldetag: **25.07.86**

(51) Int. Cl.⁵: **A01C 17/00**

(54) **Schleuderdüngerstreuer.**

(30) Priorität: **27.07.85 DE 3527007**

(43) Veröffentlichungstag der Anmeldung:
**25.02.87 Patentblatt 87/09**

(45) Bekanntmachung des Hinweises auf die
Patenterteilung:
**07.10.92 Patentblatt 92/41**

(84) Benannte Vertragsstaaten:
**AT BE CH DE FR GB IT LI LU NL SE**

(56) Entgegenhaltungen:
**BE-A- 640 501**
**DE-A- 2 407 085**
**DE-U- 7 116 432**
**US-A- 3 473 739**

(73) Patentinhaber: **Amazonen-Werke H. Dreyer**
**GmbH & Co. KG**
**Postfach 51**
**W-4507 Hasbergen-Gaste(DE)**

(72) Erfinder: **Dreyer, Heinz, Dr. Dipl.-Ing.**
**Am Amazonenwerk 7**
**W-4507 Hasbergen(DE)**
Erfinder: **Wiese, Walter**
**Roter Berg 18**
**W-4507 Hasbergen(DE)**

(74) Vertreter: **Patentanwälte Grünecker, Kinkel-**
**dey, Stockmair & Partner**
**Maximilianstrasse 58**
**W-8000 München 22(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zum Betreiben eines Schleuderdüngerstreuers als Reihenstreuvorrichtung zum Düngen von Reihenkulturen, bei dem von Schleuderscheiben abgeworfener Dünger von einem Auffangbehälter aufgefangen und auf zwei oder mehrere schlauchförmige Leitungen mit Hilfe einer Leiteinrichtung verteilt wird.

Ein derartiges Verfahren ist aus dem deutschen Gebrauchsmuster 7116432 bekannt. Der Auffangbehälter der dort beschriebenen Reihenstreuvorrichtung ist im Bereich der Schleuderscheibe derart angeordnet, daß er die von der Schleuderscheibe abgeschleuderten Düngemittelpartikel auffängt. Der abgeschleuderte Düngemittelstrom wird mit Hilfe von Leit- und Aufteileinrichtungen aufgeteilt und in etwa gleicher Menge einzelnen schlauchförmigen Leitungen zugeteilt.

Das aus dieser Entgegenhaltung entnehmbare Verfahren weist jedoch den Nachteil auf, daß die Düngemittelkörner mit der gleichen Abwurfgeschwindigkeit wie beim breitwürfigen Düngen (hier als Normalstreuung bezeichnet) abgeschleudert und folglich mit hoher Geschwindigkeit in den Auffangbehälter abgeworfen werden, so daß dieser sehr dicht ausgebildet und somit die Schleuderscheibe gekapselt in ihm angeordnet sein muß. Die in den Auffangbehälter hineingeschleuderten Düngemittelpartikel treffen auf die Wände des Auffangbehälters auf und prallen von diesen teilweise unkontrolliert zurück. Hierdurch ist eine gleichmäßige Aufteilung des Düngemittelstroms auf die einzelnen schlauchförmigen Leitungen relativ schwierig. Weiterhin ist das Abschleudern der Düngemittelpartikel mit hoher Geschwindigkeit in den Auffangbehälter deshalb nachteilig, weil hierdurch Körnerbruch, Staub, Beschädigung der Auffangteile ETC hervorgerufen werden. Vor allem wirkt sich Körnerbruch und die hieraus resultierenden staubförmigen Teile des Düngemittels nachteilig auf dessen gleichmäßige Zuteilung auf die einzelnen schlauchförmigen Leitungen aus.

Diese Nachteile werden in jüngster Zeit immer größer, da derzeit von den Schleuderdüngerstreuern immer größere Arbeitsbreiten von 18 bis 24 m bzw. immer größere Wurfweiten bis zu 40 m und mehr von der Praxis gefordert werden und auch mit den moderner Düngestreuern erreichbar sind.

Aus der DE-OS 24 07 085 ist es bekannt, mit einem Auffangbehälter an einem Schleuderstreuer zu arbeiten, der als Reihenstreuvorrichtung eingesetzt wird.

Ordnet man jedoch diesen Auffangbehälter am Schleuderstreuer an, so prallen die Partikel mit großer Wucht gegen den Auffangbehälter, was, wie schon zur DE-GM 71 16 432 erwähnt, zu Körnerbruch führen kann und auch sich nachteilig auf die gleichmäßige Zuteilung auf einzelne schlauchförmige Leitungen hat.

Ausgehend von diesem Stand der Technik liegt der Erfindung die Aufgabe zugrunde, ein Verfahren der eingangs genannten Art so weiterzubilden, daß die Aufteilung des von der Schleuderscheibe abgeschleuderten Düngemittelstroms unter Ausschaltung der vorgeschilderten Nachteile des Standes der Technik geschehen kann.

Diese Aufgabe wird erfindungsgemäß mit dem im kennzeichnenden Teil des Anspruchs 1 beschriebenen Verfahrensmerkmalen gelöst.

Mit diesen Merkmalen wird erreicht, daß der Dünger sehr weich in den Auffangbehälter geworfen wird, so daß praktisch kein Körnerbruch entsteht. Weiterhin kann durch die geringe Abwurfgeschwindigkeit der Art, daß sich der Dünger nur im wesentlichen auf die Breite des Auffangbehälters verteilt, eine sehr gleichmäßige und genaue Verteilung auf die einzelnen Leitungen erfolgen. Auch werden die Auffangteile des Auffangbehälters geschont, so daß praktisch kein Verschleiß auftritt.

In vorteilhafter Ausgestaltung der erfindungsgemäßen Verfahrensführung ist vorgesehen, daß zum Reihenstreuen Schleuderscheiben verwendet werden, die selbst oder deren Wurfelemente auswechselbar und/oder verstellbar sind. Durch diese Maßnahme läßt sich die Abwurfgeschwindigkeit variieren und somit beispielsweise auf Reihenstreuvorrichtungen mit unterschiedlichen Arbeitsbreiten bzw. unterschiedlicher Reihenzahl bei ein und demselben Schleuderdüngerstreuer bzw. Schleuderdüngerstreuertyp umstellen. Auch ist eine Anpassung an unterschiedliche Düngemittelsorten bzw. staubförmige oder granulierte Dünger möglich, wobei verstellbare Wurfelemente eine besonders feine Einstellung erlauben.

Das Abwerfen mit Wurfelementen, die zumindest in ihrem äußeren Bereich in etwa tangentialer Richtung der Schleuderscheibe weisen, bringt bei der Aufgabenlösung besondere Vorteile, weil dadurch in besonders geeigneter Weise eine "weiche" Förderung erzielt wird. Allerdings kann das Abwerfen auch mit Wurfelementen erfolgen, die in ihrem äußeren Bereich einen Winkel von größer als 45° zur Tangentialen bilden. Ebenfalls kann das Abwerfen mit Wurfelementen erfolgen, die gekrümmt ausgebildet sind, wobei sich eine spiralige Ausbildung, insbesondere mit einer nach außen zunehmend ansteigenden Steigung als besonders vorteilhaft erwiesen hat. Darüberhinaus ist es aber auch möglich, mit Wurfelementen abzuwerfen, die etwa radial zur Schleuderscheibe angstellt sind.

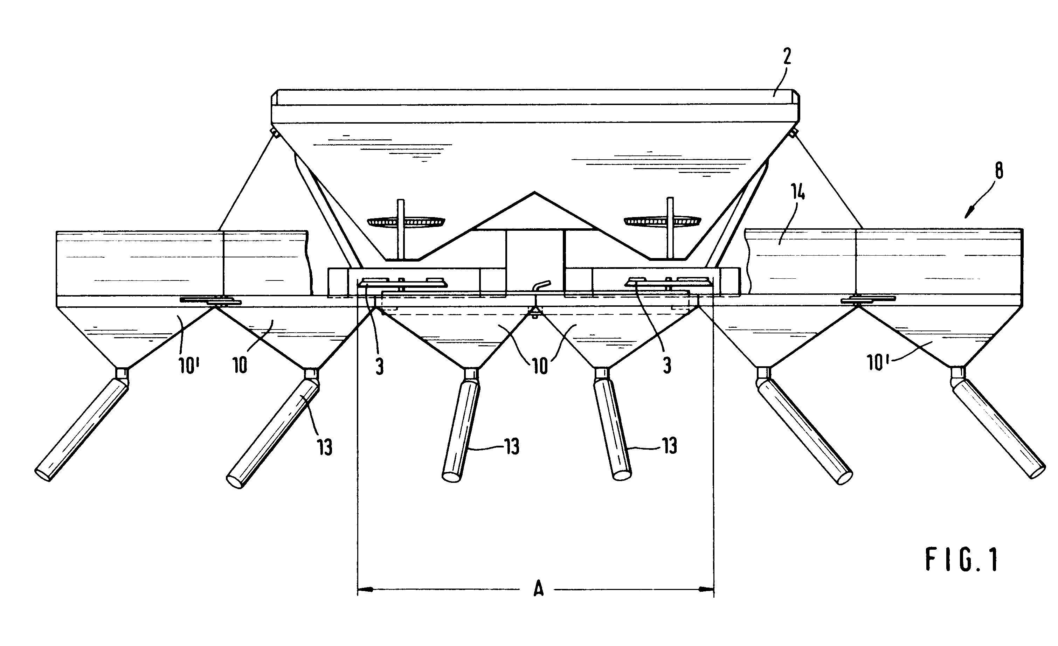

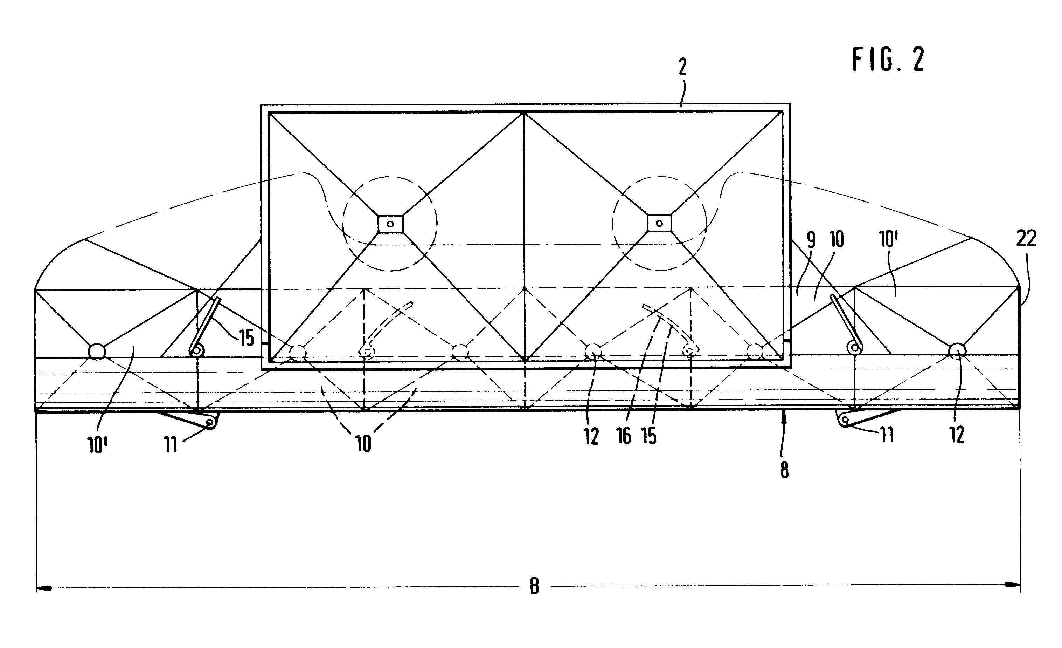

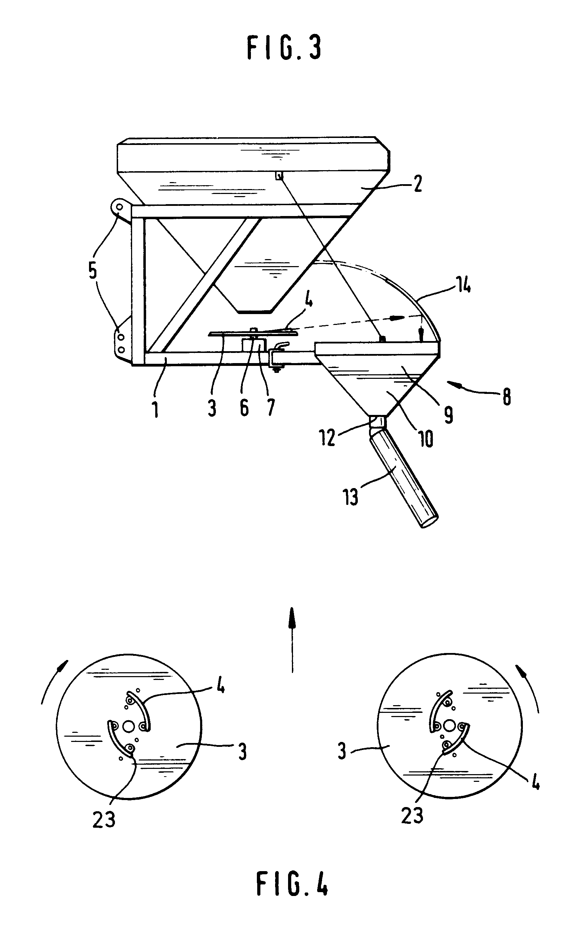

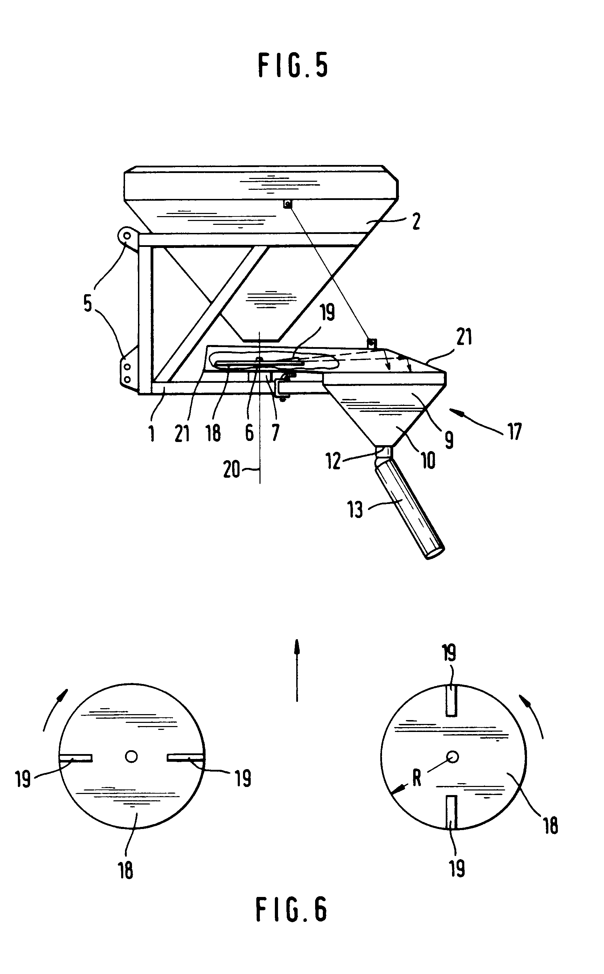

Im folgenden wird die Erfindung unter Bezugnahme auf die Zeichnung näher beschrieben. Es zeigt Figur 1 eine Rückansicht eines Schleuderdüngerstreuers zur Durchführung des erfindungsgemäßen Verfahrens, Figur 2 eine Draufsicht des in Figur 1 gezeigten Schleuderdüngerstreuers, Figur 3 eine Seitenansicht des in Figur 1 gezeigten Schleuderdüngerstreuers, Figur 4 eine Draufsicht auf die im Schleuderdüngerstreuer nach Figur 1 eingesetzten Schleuderscheiben nach einer ersten Verfahrensvariante, Figur 5 eine Seitenansicht eines Schleuderdüngerstreuers mit Reihenstreuvorrichtung der gemäß einer zweiten Verfahrensvariante betrieben wird und Figur 6 die Draufsicht auf die in Figur 5 verwendeten Schleuderscheiben.

Der Schleuderdüngerstreuer nach den Figuren 1 bis 3 weist einen Rahmen 1, einen Vorratsbehälter 2 sowie zwei unter dem Vorratsbehälter 2 angeordnete Schleuderscheiben 3 für das Düngen von Reihenkulturen mit Wurfelementen 4 auf. An der Vorderseite des Rahmens 1 sind Dreipunktkupplungselemente 5 angeordnet, so daß der Schleuderdüngerstreuer an die Dreipunkthebevorrichtung eines Schleppers anzubauen ist. Die Schleuderscheiben 3 sind auf je einer Getriebeausgangswelle 6 abnehmbar angeordnet. Die Getriebeausgangswellen 6 enden in einem Abstand unterhalb des Vorratsbehälters 2 derart, daß die Schleuderscheiben 3 ohne Demontage des Getriebes 7 bzw. des Vorratsbehälters 2 von den Wellen 6 abnehmbar bzw. auf diese aufsetzbar sind.

Für den Einsatz des Schleuderdüngerstreuers für das breitwürfige Streuen (Normalstreuen) sind nicht-dargestellte Schleuderscheiben vorgesehen, die den Dünger über derartige Weiten abschleudern, daß Arbeitsbreiten von bis zu 24 m und mehr erreichbar sind.

Soll der Schleuderdüngerstreuer für das Düngen von Reihenkulturen, beispielsweise zum Düngen von Mais, eingesetzt werden, so wird eine Reihenstreuvorrichtung 8 mittels Schnellverschlüssen an der Rückseite des Rahmens 1 befestigt und die nicht-dargestellten Normalstreuscheiben gegen die oben genannten Reihenstreuscheiben 3 ausgetauscht.

Die Reihenstreuvorrichtung 8 ist mit einem Auffangbehälter 9 versehen, der in der Mitte vier fest miteinander verbundene trichterförmige Teilkästen 10 aufweist. In Verlängerung dieser Teilkästen 10 sind jeweils an den Außenseiten ein weiterer Teilkasten 10' mit Hilfe von Gelenken 11 angeordnet. Somit können diese Teilkästen 10' in eine Arbeitsstellung seitlich neben die Teilkästen 10 und nach hinten in eine Transportstellung geschwenkt werden. Die trichterförmigen Teilkästen 10 und 10' weisen in ihrem unteren Bereich je eine Öffnung 12 auf, an die jeweils eine schlauchförmige Leitung 13 angeschlossen ist. Die Leitungen 13 sind verschwenkbar und feststellbar an den Teilkästen 10 und 10' angeordnet, so daß die Reihenstreuvorrichtung 8 an unterschiedliche Reihenweiten angepaßt werden kann.

Auf der Rückseite der Reihenstreuvorrichtung 8 sind Auffangblenden 14 angeordnet. Weiterhin befinden sich oberhalb des Auffangbehälters 9 einstellbare Leitblenden 15 der Leiteinrichtung 16.

Wie bereits oben erwähnt, sind die Schleuderscheiben 3 mit den Wurfelementen 4 leicht austauschbar an dem Schleuderdüngerstreuer angeordnet. Für den Einsatz des Schleuderdüngerstreuers zusammen mit der Reihenstreuvorrichtung 8 werden Wurfelemente 4 verwendet, die derart ausgebildet sind, daß der Dünger mit einer deutlich geringeren, jedoch mindestens für das Abschleudern des Düngers bis zum Erreichen sämtlicher Leitungen 13 ausreichenden Abwurfgeschwindigkeit abgeschleudert wird. Diese im Vergleich zum Normalstreuen reduzierte Abwurfgeschwindigkeit ist derart gering gewählt, daß die Düngemittelpartikel etwas bis zu den äußeren Enden 22 der Leiteinrichtung 16 bzw. des Auffangbehälters 9 geschleudert werden. Dabei weisen die Wurfelemente 4 eine "weiche" Förderung auf. Dazu sind sie in ihrem äußeren Bereich 23 in etwa tangentialer Richtung weisend angeordnet. Somit weisen die Wurfelemente 4 in ihrem äußeren Bereich 23 einen Winkel von > als 45° zur Tangentialen auf. Die Wurfelemente 4 sind verstellbar auf der Schleuderscheibe 3 angeordnet. Somit kann jeweils die geringstmögliche Geschwindigkeit bzw. die entsprechende Wurfweite der von den Wurfelementen 4 abgeschleuderten Düngemittelpartikel der jeweiligen Breite B der Reihenstreuvorrichtung 8 angepaßt werden. Dies ist erforderlich, wenn die Reihenstreuvorrichtung entweder mit vier oder sechs Teilkästen 10 bzw. 10' für die entsprechende Reihenzahl eingesetzt werden soll.

Die am Auffangbehälter 9 angeordneten Aufteil- oder Leitblenden sind einstellbar angeordnet. Diese Blenden 14 können jeweils so eingestellt werden, daß jedem Teilkasten die gleiche Menge Dünger von den Wurfelementen 4 zugeleitet wird. Der Auffangbehälter 9 weist eine mindestens das 1,3-fache größere Breite B als der äußere Abstand A der äußeren Teile der Schleuderscheiben 3 auf. Somit sind für den Auffangbehälter 9 ohne Schwierigkeiten Breiten erreichbar, die etwa der Arbeitsbreite der Reihenstreuvorrichtung 8 entspricht. Der Dünger kann dann auf kürzestem Weg über die Leitungen 13 aus den Teilkästen 10 und 10' auf dem Boden abgelegt werden.

Die Wurfelemente 4 sind gekrümmt sowie spiralig ausgebildet, so daß sie eine sehr langsam nach außen ansteigende Steigung aufweisen. Durch diese leicht gekrümmte Ausbildung der Wurfelemente 4 wird eine sehr weiche Förderung und eine sehr geringe Wurfweite erreicht, so daß die Düngemittelkörner sehr weich auf die Auffangblenden 14 bzw. Leitblenden 15 aufprallen bzw. an sie herangeworfen werden.

Die für den Einsatz mit der Reihenstreuvorrichtung 8 vorgesehenen Wurfelemente 4 sind so angestellt, daß der Dünger in Verbindung mit den Leitblenden 15 gleichmäßig in die einzelnen Teilkästen 10 und 10' geworfen wird. Die Leitblenden 15 können den jeweiligen Einsatzbedingungen angepaßt werden, so daß der Dünger gleichmäßig in die einzelnen Teilkästen geworfen wird.

Die in Figur 5 dargestellte Reihenstreuvorrichtung 17 weist prinzipiell den gleichen Aufbau wie diejenige nach Figur 1 auf, ist jedoch mit einer anderen Reihenstreuvorrichtung 17 und anderen Schleuderscheiben 18 ausgerüstet. Die Reihenstreuvorrichtung 17 weist ebenfalls einen Auffangbehälter 9 mit trichterförmigen Teilkästen 10 auf. Diese Teilkästen 10 sind an ihrem unteren Bereich mit je einer öffnung 12 versehen, an die eine schlauchförmige Leitung 13 angeschlossen ist. Für den Einsatz der Reihenstreuvorrichtung 17 werden auf den Wellen 6 die in Figur 6 dargestellten Schleuderscheiben 18, die ausschließlich für den Einsatz mit dieser Reihenstreuvorrichtung vorgesehen sind, anstelle der nicht-dargestellten Schleuderscheiben für das Normalstreuen aufgesetzt. Die Schleuderscheiben 18 weisten Wurfelemente 19 auf, die im wesentlichen radial angestellt sind. Der Radius R der für die Reihenstreuvorrichtung 17 vorgesehenen Schleuderscheiben 18 entspricht etwa dem Abstand des äußeren Randes der Auslauföffnung des Vorratsbehälters 2 von der Drehachse 20 der Schleuderscheiben 18. Der Durchmesser der für die Reihenstreuung verwendeten Schleuderscheiben 18 ist wesentlich kleiner als der Durchmesser der Normalstreuscheiben. Desweiteren weist die Reihenstreuvorrichtung 17 ein lösbar mit dem Auffangbehälter 9 verbundenes Gehäuse 21 auf, welches um die Schleuderscheiben herum angeordnet ist. Das aus dem Vorratsbehälter 2 des Schleuderdüngerstreuers über nicht-dargestellte Dosierorgane, beispielsweise in Form von mittels eines einstellbaren Schiebers in unterschiedliche Öffnungsweiten einstellbaren Auslauföffnungen, abgegebene Dünger gelangt durch eine nicht-dargestellte Öffnung im Gehäuse 21 auf die Schleuderscheiben 18. Dort wird das Düngemittel von den Wurfelementen 19 der rotierenden Schleuderscheiben 18 erfaßt und innerhalb des Gehäuses 21 in Richtung des Auffangbehälters 9 geschleudert, wobei oberhalb desselben bzw. der Teilkästen 10 einstellbare Leitbleche angeordnet sind, um so sicherzustellen, daß jeder Leitung 13 die gleiche Menge Dünger zugeführt wird. Das geschlossene Gehäuse 21 gewährleistet, daß keine Düngemittelpartikel an der Reihenstreuvorrichtung 17 vorbeigeschleudert werden oder vorbeifallen, sondern in jedem Fall nur über die Leitungen 13 zum Boden gelangen.

**Patentansprüche**

1.  Verfahren zum Betreiben eines Schleuderdüngerstreuers als Reihenstreuvorrichtung zum Düngen von Reihenkulturen, bei dem von Schleuderscheiben (3, 18) abgeworfener Dünger von einem Auffangbehälter (9) aufgefangen und auf zwei oder mehrere schlauchförmige Leitungen (13) mit Hilfe einer Leiteinrichtung (14) verteilt wird,
    dadurch **gekennzeichnet,**
    daß zum Reihenstreuen Schleuderscheiben mit Wurfelementen verwendet werden, die den Dünger mit einer so geringen Abwurfgeschwindigkeit abwerfen, daß die Düngemittelpartikel etwa bis zu den äußeren seitlichen Enden (22) des Auffangbehälters (9) geschleudert werden.

2.  Verfahren nach Anspruch 1,
    **dadurch gekennzeichnet,**
    daß zum Reihenstreuen Schleuderscheiben verwendet werden, die selbst oder deren Wurfelemente (4, 19) auswechselbar und/oder verstellbar sind.

3.  Verfahren nach Anspruch 1 oder 2,
    **dadurch gekennzeichnet,**
    daß der Dünger mit zumindest in ihrem äußeren Bereich (23) in etwa tangentialer Richtung der Schleuderscheiben weisenden Wurfelementen abgeworfen wird.

4.  Verfahren nach wenigstens einem der Ansprüche 1 - 3,
    **dadurch gekennzeichnet,**
    daß der Dünger mit zumindest in ihrem äußeren Bereich (23) einen Winkel von größer als 45° zur Tangentialen der Schleuderscheibe bildenden Wurfelementen (4) abgeworfen wird.

5.  Verfahren nach wenigstens einem der Ansprüche 1 - 4,
    **dadurch gekennzeichnet,**
    daß der Dünger mit zwei Schleuderscheiben (3, 18) abgeworfen wird.

6.  Verfahren nach wenigstens einem der vorangegangenen Ansprüche,
    **dadurch gekennzeichnet,**
    daß der Dünger mit gekrümmt ausgebildeten Wurfelementen (4) abgeworfen wird.

7.  Verfahren nach Anspruch 6,
    **dadurch gekennzeichnet,**
    daß der Dünger mit spiralig ausgebildeten Wurfelementen abgeworfen wird.

8.  Verfahren nach Anspruch 7,

**dadurch gekennzeichnet,**
daß der Dünger mit spiralig ausgebildeten Wurfelementen (4) die eine allmählich nach außen ansteigende Steigung aufweisen, abgeworfen wird.

9. Verfahren nach Anspruch 1,
   **dadurch gekennzeichnet,**
   daß der Dünger mit etwa radial zur Schleuderscheibe angestellten Wurfelementen (19) abgeworfen wird.

## Claims

1. Method of operating a centrifugal fertilizer broadcaster as a row broadcasting device for fertilizing linear cultivations, wherein fertilizer, which has been discharged by centrifugal discs (3, 18), is collected by a collecting vessel (9) and distributed to two or more tubular pipelines (13) by means of a guide mechanism (14), characterised in that centrifugal discs, which include throwing elements, are used for the row broadcasting operation and discharge the fertilizer at such a low discharge speed that the particles of fertilizer are centrifuged substantially over a range up to the outer lateral ends (22) of the collecting vessel (9).

2. Method according to claim 1, characterised in that centrifugal discs are used in the row broadcasting operation and are themselves, or their throwing elements (4, 19), interchangeable and/or adjustable.

3. Method according to claim 1 or 2, characterised in that the fertilizer is discharged by throwing elements which, in their outer region (23), point into substantially the tangential direction of the centrifugal discs.

4. Method according to at least one of claims 1 - 3, characterised in that the fertilizer is discharged by throwing elements (4), which form, at least in their outer region (23), an angle greater than 45° relative to a tangent to the centrifugal disc.

5. Method according to at least one of claims 1 - 4, characterised in that the fertilizer is discharged by two centrifugal discs (3, 18).

6. Method according to at least one of the preceding claims, characterised in that the fertilizer is discharged by curved throwing elements (4).

7. Method according to claim 6, characterised in that the fertilizer is discharged by helical throwing elements.

8. Method according to claim 7, characterised in that the fertilizer is discharged by helical throwing elements (4), which have a gradually outwardly ascending inclination.

9. Method according to claim 1, characterised in that the fertilizer is discharged by throwing elements (19), which are orientated substantially radially relative to the centrifugal disc.

## Revendications

1. Procédé de mise en oeuvre d'un distributeur centrifuge d'engrais comme dispositif d'épandage en lignes pour amender des cultures en lignes, procédé selon lequel l'engrais éjecté par les disques d'épandage centrifuges (3, 18) est recueilli par un réceptacle (9) et est réparti entre deux ou plusieurs conduites tubulaires (13) à l'aide d'une installation de conduite (14), procédé caractérisé en ce que pour l'épandage en lignes, on utilise des disques d'épandage à éléments éjecteurs qui éjectent l'engrais avec une vitesse d'éjection suffisamment faible pour que les particules d'engrais arrivent sensiblement jusqu'au niveau des extrémités latérales extérieures (22) du réceptacle (9).

2. Procédé selon la revendication 1, caractérisé en ce que pour l'épandage en lignes, on utilise des disques d'épandage qui sont eux-mêmes remplaçables ou réglables et/ou dont les éléments éjecteurs (4, 19) sont échangeables ou réglables.

3. Procédé selon la revendication 1 ou 2, caractérisé en ce que l'engrais est éjecté par des éléments éjecteurs dont au moins la zone extérieure (23) est dirigée sensiblement dans la direction tangentielle des disques d'épandage.

4. Procédé selon au moins l'une des revendications 1 à 3, caractérisé en ce que l'engrais est éjecté par des éléments éjecteurs (4) qui forment, au moins dans leur zone extérieure (23), un angle supérieur à 45° par rapport à la tangente au disque d'épandage.

5. Procédé selon au moins l'une des revendications 1 à 4, caractérisé en ce que l'engrais est éjecté par deux disques d'épandage centrifuges (3, 18).

6. Procédé selon au moins l'une des revendications précédentes, caractérisé en ce que l'engrais est éjecté avec des éléments d'éjection (4) coudés.

7. Procédé selon la revendication 6, caractérisé en ce que l'engrais est éjecté par des éléments d'éjection en forme de spirale.

8. Procédé selon la revendication 7, caractérisé en ce que l'engrais est éjecté par des éléments éjecteurs en forme de spirale (4), ayant une pente augmentant progressivement vers l'extérieur.

9. Procédé selon la revendication 1, caractérisé en ce que l'engrais est éjecté par des éléments éjecteurs (19) disposés sensiblement dans la direction radiale par rapport au disque d'épandage.

FIG.1

FIG. 2

# FIG.3

# FIG.4

# FIG.5

# FIG.6